# FASCICULE DE BREVET EUROPEEN

(11) **EP 1 118 401 B1**
(45) Date de publication et mention de la délivrance du brevet: **31.03.2004**
(21) Numéro de dépôt: 00440018.0
(22) Date de dépôt: 21.01.2000
(51) Int. Cl.: B21D 41/02

(54) **Dispositif d'expansion pour réaliser des emboîtures aux extrémités de tuyaux**
Aufweitungsvorrichtung zum Formen von Muffen an Rohrenden
Expanding device for forming bells at tube ends

(43) Date de publication de la demande: 25.07.2001
(73) Titulaire: VIRAX S.A., F-51206 Epernay Cédex (FR)
(72) Inventeur: Tandart, Jean-Marie, 51200 Epernay (FR)
(74) Mandataire: Rhein, Alain

(56) Documents cités:
- GB-A- 1 485 098
- GB-A- 1 524 149

## Description

La présente invention a pour objet un dispositif d'outil d'expansion pour pince à réaliser des emboîtures aux extrémités de tuyaux utilisés dans le domaine de la plomberie, et notamment de tuyaux en cuivre ou en matière plastique ou en matière plastique recouverts d'une enveloppe métallique.

L'aboutement des tuyaux est réalisé au moyen de raccords métalliques sur lesquels les extrémités desdits tuyaux sont emboîtées.

En pratique, l'extrémité du tuyau est évasée à l'aide d'une pince à emboîture, puis emboîtée sur le raccord, l'élasticité de la matière assurant leur solidarisation incomplète, laquelle est renforcée par une bague externe ou une déformation externe.

Une pince à emboîture comporte d'une part un outil d'expansion comprenant une pièce de forme cylindrique constituée du rapprochement de mors en forme de secteurs mobiles radialement dans une douille tout en étant rappelés les uns vers les autres par des moyens élastiques; et d'autre part un corps prolongé d'un bras sur lequel est solidarisable ledit outil à expansion, et sur lequel s'articule un autre bras dont l'actionnement permet l'extraction dudit corps d'une aiguille conique qui s'insère axialement entre lesdits mors, provoquant leur écartement et ainsi l'évasement de l'extrémité du tuyau dans laquelle lesdits mors auront été préalablement introduits.

Or, les tuyaux en matière plastique ou en matière plastique recouverts d'une enveloppe métallique qui possèdent une épaisseur importante sont très difficiles à évaser avec une pince à emboîture de ce type.

Cette difficulté vient du fait qu'à l'amorce de l'expansion, les bras de la pince sont éloignés l'un de l'autre, sensiblement à angle droit et que, dans cette position, il n'est pas aisé d'exercer un effort important pour les rapprocher.

On connait également des pinces à emboîture modulables, où l'axe de pivotement des bras peut être déplacé. Une telle pince est décrite dans le document GB 1 485 098, le déplacement de l'axe de pivotement de la branche mobile permettant de faire varier le point de départ de l'aiguille au niveau du corps, et d'obtenir ainsi plusieurs longueurs de la course de l'aiguille, en sorte que l'évasement peut être effectué de proche en proche par augmentation de ladite course. Ces pinces sont toutefois de conception complexe et à la longue d'une relative fragilité, de plus l'augmentation de la course de l'aiguille entre les mors n'est pas modulable, puisque le nombre de longueurs est limité.

On notera qu'il est également proposé, dans le document précité, de faire varier la longueur de la course de l'aiguille en intercalant un manchon de rallonge entre le corps et l'outil d'expansion, en sorte de faire varier la distance qui les sépare. Les poses et déposes successives de ce manchon, ou d'autres analogues de dimensions diverses, lors de la réalisation d'évasements, demeurent toutefois contraignantes et n'autorisent pas une grande modularité.

On connaît également, notamment par le document GB 1.524.149, des outils d'expansion dont la pièce cylindrique est apte à recevoir extérieurement un manchon constitué du rapprochement d'éléments en forme de secteurs d'anneau, ce qui autorise une adaptation au diamètre du tube à évaser, mais qui ne résout pas le problème de l'effort à fournir pour rapprocher les bras de la pince, sauf à réaliser une succession d'augmentations du diamètre, ce qui demeure fastidieux.

La présente invention a pour but de remédier aux divers inconvénients précités en proposant un dispositif d'outil d'expansion pour pince à emboîture, permettant de réaliser des emboîtures avec moins d'effort, et qui s'adapte sur une pince classique.

Le dispositif d'outil d'expansion selon l'invention est du type comprenant une pièce cylindrique constituée du rapprochement de mors en forme de secteurs, mobiles radialement dans une douille destinée à être solidarisée au corps d'une pince à emboîture, lesdits mors étant rappelés les uns vers les autres par des moyens élastiques, tandis que leur écartement est réalisé par l'introduction axiale entre eux d'une aiguille conique actionnée par ladite pince, et comportant des moyens permettant d'obtenir plusieurs longueurs de la course de ladite aiguille conique, et il se caractérise essentiellement en ce que ladite douille coopère avec des moyens pour permettre de déplacer la pièce cylindrique par rapport audit corps dans un mouvement de translation axiale généré par la rotation de ladite douille.

Le déplacement axial de la pièce cylindrique permet d'effectuer un réglage de sa position avant une opération d'expansion, ce qui a pour effet de modifier l'évasement de la pièce cylindrique en conservant un écartement optimum des bras de la pince pour mieux transmettre l'effort. L'évasement de la pièce cylindrique pour la réalisation d'une emboîture peut ainsi être réalisé en plusieurs étapes dans chacune desquelles ladite pièce cylindrique est de plus en plus proche du corps de la pince à emboîture.

La douille supportant la pièce cylindrique peut être solidarisée au corps de la pince par l'intermédiaire d'une pièce telle qu'une couronne, solidarisée par exemple par vissage et, éventuellement, par l'intermédiaire d'une bague au corps de ladite pince, et dont la rotation relative de ladite couronne par rapport à la douille provoque le déplacement axial de cette dernière et donc de la pièce cylindrique. Pour réaliser ce déplacement axial la douille peut comporter sur sa paroi externe une rainure hélicoïdale coopérant avec une rainure hélicoïdale pratiquée dans la paroi interne de la couronne.

Les rainures hélicoïdales peuvent avantageusement avoir un pas adapté pour permettre un déplacement axial de la pièce cylindrique rapide. En outre la bague sera déterminée de manière que la douille vienne en butée contre celle-ci en position rentrée.

La douille supportant les mors peut avantageusement comporter une jupe périphérique s'étendant coaxialement à la pièce cylindrique formée par lesdits mors et débordant la couronne de manière à permettre la préhension de la douille suppportant les mors pour son manoeuvrement en rotation qui a pour effet de la déplacer axialement en vue de régler sa position par rapport au corps de la pince.

Le dispositif selon la présente invention permet de réaliser une déformation radiale et longitudinale progressive de l'extrémité du tuyau en modifiant, au cours de l'opération d'évassement, la position relative de la pièce cylindrique par rapport au corps de la pince.

Les avantages et les caractéristiques de la présente invention ressortiront plus clairement de la description qui suit et qui se rapporte au dessin annexé, lequel en représente un mode de réalisation non limitatif.

Dans le dessin annexé:
- la figure 1 représente une vue de dessus d'un outil d'expansion de type connu
- la figure 2 représente une vue en coupe longitudinale médiane du même outil
- la figure 3 représente une vue en coupe longitudinale médiane d'un dispositif d'outil d'expansion selon l'invention dans un mode de réalisation préférentiel.
- les figures 4 et 5 représentent des vues en coupe longitudinale du même outil d'expansion monté sur une pince représentée partiellement, dans deux configurations différentes d'utilisation.

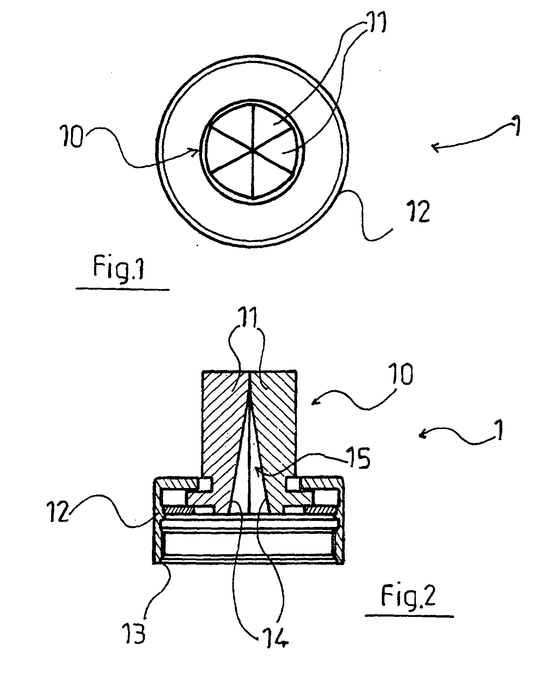

En référence aux figures 1 et 2, on peut voir qu'un outil d'expansion 1 de type connu comporte une pièce cylindrique 10 constituée du rapprochement de mors 11 en forme de secteurs, montés dans une douille 12, dans laquelle ils sont mobiles radialement et rappelés par des moyens élastiques, non représentés, de type ressorts.

Par ailleurs, la douille 12 comporte intérieurement, du côté oppposé à celui duquel fait saillie la pièce cylindrique 10, un filetage 13 permettant sa solidarisation sur une pince à emboîture, non représentée.

Les mors 11 présentent chacun intérieurement un évidement 14 qui crée dans la pièce cylindrique 10 une cavité 15 de forme conique, destinée à recevoir une aiguille conique, non représentée, mobile axialement, dont le déplacement axial, commandé par l'actionnement de la pince dont l'aiguillle conique est un composant, provoque l'écartement des mors 11 alors que l'extrémité d'un tuyau, non représenté, est engagée sur la pièce cylindrique 10.

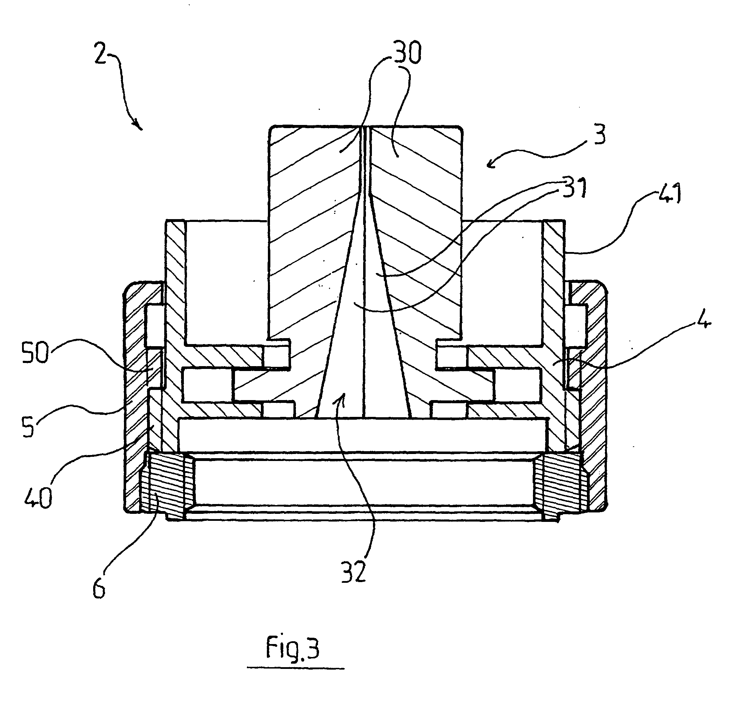

Si on se réfère maintenant à la figure 3, on peut voir qu'un dispositif d'outil d'expansion 2 selon l'invention comporte également une pièce cylindrique 3 constituée du rapprochement de mors 30 en forme de secteurs, montés dans une douille 4 dans laquelle ils sont mobiles radialement en étant rappelés par des moyens élastiques, non représentés, et qui comportent chacun un évidement 31 qui crée dans la pièce cylindrique 3 une cavité 32 de forme conique.

La douille 4 est introduite dans une couronne 5 à laquelle elle est solidarisée par vissage, la douille 4 comportant à cet effet un filetage extérieur périphérique 40 tandis que la couronne 5 comporte un taraudage intérieur périphérique 50. Par le vissage ou le dévissage de la douille 4 dans la couronne 5, on obtient un déplacement axial de l'une par rapport à l'autre.

La couronne 5 est destinée à être solidarisée par vissage sur une pince, non représentée, ce qui est réalisé, en raison de contraintes de fabrication et pour permettre l'adaptation de l'outil 2 sur une pince existante, par l'intermédiaire d'une bague 6 filetée extérieurement pour être solidarisée à la couronne 5 et intérieurement pour sa solidarisation à la pince.

Par ailleurs, la douille 4 comporte une jupe périphérique 41 qui s'étend coaxialement à la pièce cylindrique 3 et qui déborde la couronne 5 même lorsque la douille 4 est en butée contre la bague 6. Cette jupe périphérique 41 est destinée à permettre la préhension de la douille 4 pour son manoeuvrement en rotation en vue de son vissage ou de son dévissage, sans pour autant empêcher la mise en place de l'extrémité d'un tuyau sur la pièce cylindrique 3.

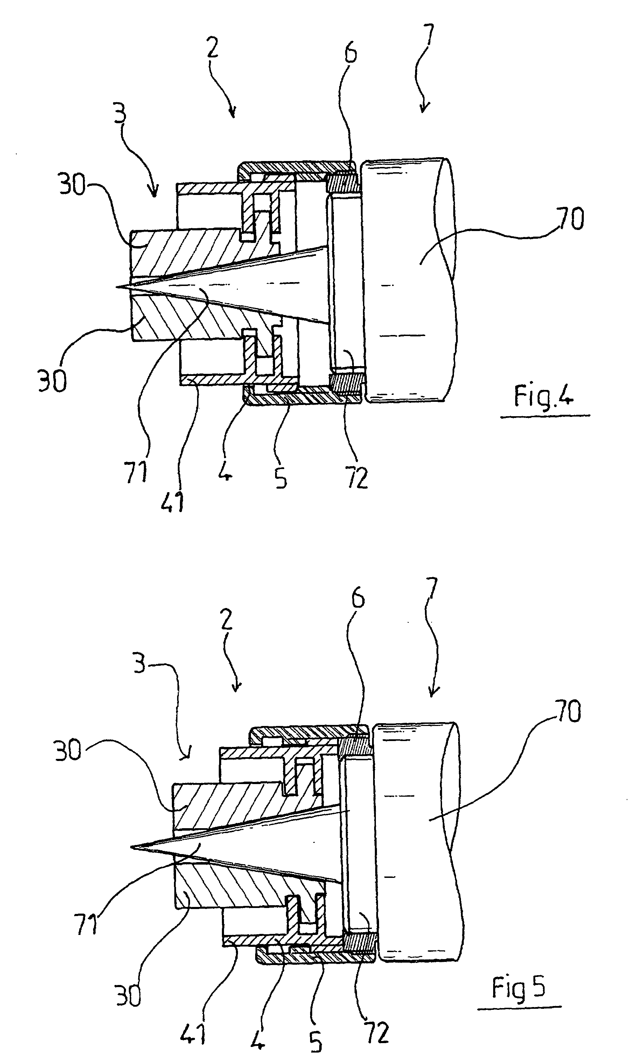

En référence maintenant aux figures 4 et 5, on peut voir un outil d'expansion 2 selon l'invention adapté sur une pince 7 dont n'est visible que le corps 70 et l'aiguille conique 71. L'outil d'expansion 2 est vissé sur le corps 70, ou plus excatement la bague 6 est vissée sur une partie filetée 72 du corps 7.

Sur ces figures l'aiguille conique 71 est représentée dans sa position de sortie maximale, laquelle correspond à une position de rapprochement maximum des deux branches, non représentées, de la pince 7.

Sur la figure 4, la douille 4 occupe dans la couronne 5 une position éloignée de la bague 6 et donc du corps 70, et lorsque l'aiguille conique 71 entre en contact avec les mors 30, les bras de la pince 7 ne sont plus à angle droit, en sorte que leur rapprochement peut être réalisé aisément.

Dans cette position la course radiale des mors 30 est limitée, ce qui ne permet pas d'obtenir l'évasement souhaité, aussi, après relâchement des bras de la pince 7 on visse la douille 4 dans la couronne 5 de manière à rapprocher les mors 30 du corps 70, en sorte de permettre un écartement plus important des mors 30. L'extrémité du tuyau étant déjà partiellement évasée, le début de la course radiale des mors 30 est réalisée sans effort, en sorte que les bras de la pince 7 ne sont plus à angle droit lorsqu'il s'agit d'exercer un effort.

On peut ainsi de proche en proche déplacer la douille 4 dans la couronne 5 jusqu'à ce qu'elle prenne la position représentée sur la figure 5, et qui correspond à l'évasement optimum pour réaliser l'emboîture.

De manière avantageuse, la rotation de la douille 4 permet de modifier l'emplacement des mors dans le tuyau et ainsi d'obtenir une emboîture bien ronde.

Il va de soi que la présente invention ne saurait être limitée à la description qui précède d'un de ses modes de réalisation, susceptible de subir un certain nombre de modifications sans pour autant sortir du cadre de l'invention.

## Revendications

1. Dispositif d'outil d'expansion du type comportant une pièce cylindrique (3) constituée du rapprochement de mors (30) en forme de secteurs mobiles radialement dans une douille (4) destinée à être solidarisée au corps (70) d'une pince (7) permettant de réaliser des emboîtures aux extrémités de tuyaux utilisés dans le domaine de la plomberie et notamment de tuyaux en cuivre ou en matière plastique ou en matière plastique recouverts d'une enveloppe métallique, lesdits mors (30) étant rappelés les uns vers les autres par des moyens élastiques, tandis que leur écartement est réalisé par l'introduction axiale entre eux d'une aiguille conique (71) actionnée par ladite pince (7), et comportant des moyens permettant d'obtenir plusieurs longueurs de la course de ladite aiguille conique (71), **caractérisé en ce que** ladite douille (4) coopère avec des moyens (5) pour permettre de déplacer la pièce cylindrique (3) par rapport audit corps (70) dans un mouvement de translation axiale généré par la rotation de ladite douille (4).

2. Dispositif selon la revendication 1, **caractérisé en ce que** la douille (4) supportant les mors (30) est solidarisée au corps (70) de la pince (7) par l'intermédiaire d'une couronne (5) solidarisée au corps (70) de la pince (7) et qui comporte une rainure hélicoïdale interne coopérant avec une rainure hélicoïdale pratiquée dans la paroi externe de la douille (4) supportant les mors (30).

3. Dispositif selon la revendication 2, **caractérisé en ce que** les rainures hélicoïdales ont un pas adapté pour permettre un déplacement axial rapide.

4. Dispositif selon la revendication 2 ou la revendication 3 **caractérisé en ce que** la couronne (5) est solidarisée au corps (70) de la pince (7) par vissage, par l'intermédiaire d'une bague (6).

5. Dispositif selon la revendication 4, **caractérisé en ce que** la douille (4) vient en butée sur la bague (6).

6. Dispositif selon l'une quelconque des revendications 2 à 5, **caractérisé en ce que** la douille (4) comporte une jupe périphérique (41) qui s'étend coaxialement à la pièce cylindrique (3), et qui déborde la couronne (5), et qui est destinée à permettre la préhension de ladite douille (4) pour son manoeuvrement en rotation.

## Patentansprüche

1. Aufweitungswerkzeugvorrichtung der Art umfassend ein zylinderförmiges Teil (3), das aus der radialen Annäherung von als bewegliche Sektoren ausgestalteten Spannbacken (30) in einer Hülse (4) besteht, dazu bestimmt, fest mit dem Körper (70) einer Zange (7) verbunden zu werden, zum Formen von Muffen an den Enden von Rohren, die auf dem Gebiet der Klempnerarbeit verwendet werden, und nämlich von Rohren aus Kupfer oder Kunststoff oder aus mit einem Metallüberzug versehenem Kunststoff, wobei die genannten Spannbacken (30) über elastische Mittel in Richtung auf einander gebracht werden, während ihre Entfernung von einander durch axiale Einführung zwischen ihnen einer kegelförmigen Nadel (71) erfolgt, die durch die genannte Zange (7) betätigt wird, und umfassend Mittel, die erlauben, mehrere Hublängen der genannten kegelförmigen Nadel (71) zu erreichen, **dadurch gekennzeichnet, daß** die genannte Hülse (4) mit Mitteln (5) zusammenwirkt, um es zu ermöglichen, das zylinderförmige Teil (3) bezüglich des genannten Körpers (70) nach einer axialen Translationsbewegung zu verschieben, die durch die Drehung der genannten Hülse (4) erzeugt wird.

2. Vorrichtung nach Anspruch 1, **dadurch gekennzeichnet, daß** die Hülse (4), die die Spannbacken (30) abstützt, fest mit dem Körper (70) der Zange (7) verbunden ist und zwar über eine fest mit dem Körper (70) der Zange (7) verbundene Krone (5), die eine spiralförmige Innennut umfaßt, die mit einer in der Außenwand der Hülse (4), die die Spannbacken (30) abstützt, vorgesehenen spiralförmigen Nut, zusammenarbeitet.

3. Vorrichtung nach Anspruch 2, **dadurch gekennzeichnet, daß** die spiralförmigen Nuten eine geeignete Ganghöhe haben, um eine schnelle axiale Versetzung zu erlauben.

4. Vorrichtung nach Anspruch 2 oder Anspruch 3, **dadurch gekennzeichnet, daß** die Krone (5) durch Verschraubung über einen Ring (6) fest mit dem Körper (70) der Zange (7) verbunden ist.

5. Vorrichtung nach Anspruch 4, **dadurch gekennzeichnet, daß** die Hülse (4) an den Ring (6) zum Anschlag kommt.

6. Vorrichtung nach irgendeinem der Ansprüche 2 bis 5, **dadurch gekennzeichnet, daß** die Hülse (4) eine Umkreisschürze (41) umfaßt, die sich koaxial zum zylinderförmigen Teil (3) erstreckt und die bezüglich der Krone (5) hervorragt und die dazu bestimmt ist, das Greifen der genannten Hülse (4) zu erlauben, um sie in Drehung zu betätigen.

## Claims

1. Expanding tool device of the type including a cylindrical part (3) made up of radially bringing together of chuck jaws (30) in form of movable sectors in a bushing (4) aimed at being made integral with the body (70) of a grip (7) allowing to form bells at the ends of tubes used in the field of plumbing and in particular of tubes made out of copper or plastic or of plastic covered with a metal sheathing, said chuck jaws (30) being brought towards each other by elastic means, while their spacing apart is carried out by axially inserting between them a tapered needle (71) actuated by said grip (7), and including means allowing to achieve several travel distances of said tapered needle (71), **characterised in that** said bushing (4) co-operates with means (5) for allowing to move the cylindrical part (3) with respect to said body (70) in an axial translation motion generated by the rotation of said bushing (4).

2. Device according to claim 1, **characterised in that** the bushing (4) supporting the chuck jaws (30) is made integral with the body (70) of the grip (7) through a crown (5) made integral with the body (70) of the grip (7) and which includes a helical inner groove co-operating with a helical groove provided for in the outer wall of the bushing (4) supporting the chuck jaws (30).

3. Device according to claim 2, **characterised in that** the helical grooves have a suitable pitch for allowing a fast axial displacement.

4. Device according to claim 2 or claim 3, **characterised in that** the crown (5) is made integral with the body (70) of the grip (7) by screwing, through a ring (6).

5. Device according to claim 4, **characterised in that** the bushing (4) comes into abutment against the ring (6).

6. Device according to any of claims 2 to 5, **characterised in that** the bushing (4) includes a peripheral skirt (41) which extends coaxially to the cylindrical part (3), and which protrudes out of the crown (5), and which is aimed at allowing to seize said bushing (4) with a view to cause it to rotate.
